# EUROPÄISCHE PATENTSCHRIFT

(11) **EP 3 453 237 B1**
(45) Veröffentlichungstag und Bekanntmachung des Hinweises auf die Patenterteilung: **29.01.2020**
(21) Anmeldenummer: 18401076.7
(22) Anmeldetag: 28.08.2018
(51) Int. Cl.: A01B 61/04

(54) **ARBEITSELEMENT MIT ÜBERLASTSICHERUNG**
WORKING ELEMENT WITH OVERLOAD PROTECTION
ÉLÉMENT DE TRAVAIL AVEC MOYENS DE SÉCURITÉ CONTRE LA SURCHARGE

(30) Priorität: 07.09.2017 DE 102017120608
(43) Veröffentlichungstag der Anmeldung: 13.03.2019
(73) Patentinhaber: Amazonen-Werke H. Dreyer GmbH & Co. KG, 49205 Hasbergen (DE)
(72) Erfinder: Scherf, Silvio, 39444 Hecklingen OT Cochstedt (DE); Polster, Joachim, 04657 Narsdorf (DE)

(56) Entgegenhaltungen:
- EP-B1- 1 125 488
- CA-A1- 2 199 335
- DE-U1- 20 008 386
- FR-A1- 2 498 875

## Beschreibung

Die Erfindung betrifft ein Arbeitselement mit Überlastsicherung gemäß dem Oberbegriff des Patentanspruches 1. DE-U-200 08 386 offenbart ein solches Arbeitselement mit Überlastsicherung.

Eine derartiges Arbeitselement mit Überlastsicherung ist in EP 1 125 488 B1 beschrieben. Ein Grubber ist mit als mit Scharen bestückten Bodenbearbeitungselementen ausgebildeten Arbeitselementen versehen. Der Grubber wird mittels einer geeigneten Anbindung an eine Zugmaschine angehangen und ist mit einem Rahmen zur Aufnahme sämtlicher Arbeitselemente versehen. Die vor Überlast gesicherten Bodenbearbeitungselemente sind in einer Vielzahl nebeneinander in hintereinander angeordneten Reihen an einem Teil des Rahmens befestigt, der quer zur Arbeitsrichtung verläuft.

Bei Auftreffen der Bodenbearbeitungselemente auf ein Hindernis, weichen diese um die Längsachse des Teiles des Rahmens an dem sie befestigt sind aus indem sie um diese Achse schwenken. Die Schwenkbewegung findet hierbei entgegen einer Kraft statt, die in Arbeitsrichtung wirkt und dafür sorgt, dass die Bodenbearbeitungselemente nach dem Ausweichvorgang wieder in Arbeitsposition zurückkehren. Die Kraft in Arbeitsrichtung wird erzeugt von einem Federpaket. Zur Krafterzeugung ist es notwendig, dass das Federpaket vorgespannt wird. Hierzu wird ein Vorspannrohr durch das als Spiraldruckfeder ausgebildete Federpaket geführt. An seinem unteren Ende ist an dem Vorspannrohr eine erste Federplatte befestigt an dem die erste Stirnseite des Federpakets anliegt. Die zweite Stirnseite des Federpakets liegt an einer zweiten Federplatte an, welcher sich am oberen Ende des Vorspannrohres befindet und axial auf dem Vorspannrohr verschiebbar ist. Das Vorspannrohr ist in diesem Bereich mit einem Gewinde versehen und wird durch die zweite Federplatte hindurch geführt. Durch das Aufschrauben einer Mutter wird die zweite Federplatte in axialer Richtung auf das Federpaket gedrückt und spannt dieses so vor.

Das Federpaket ist jeweils im Abstand zur Achse sowohl mit dem Rahmen als auch mit dem Arbeitselement über Gelenkachsen verbunden. Durch die beiden Gelenkachsen ist die Überlastsicherung derart gestaltet dass die Schwenkbewegung zum Ausweichen bei Auftreffen auf ein Hindernis zu einem Komprimieren des Federpakets führt.

Die obere Federplatte befindet sich auf der dem Federpaket abgewandten Seite in Anlage an einen Überlasthalter. Bei dem Schwenkvorgang wird die gesamte Vorrichtung derart verdreht, dass der Überlasthalter in axialer Richtung auf die obere Federplatte gepresst wird. Dadurch wird das Federpaket komprimiert und die notwendige Rückstellkraft entsteht.

Um den Verschleiß durch den Führungskontakt des Federpaketes auf dem Vorspannrohr bei Komprimieren und Entlasten des Federpaketes zu verringern, wird eine Rohrhülse aus Kunststoff über das Vorspannrohr in das Federpaket geschoben. Diese Rohrhülse umgibt das Vorspannrohr und wird ebenfalls durch die obere Federplatte hindurch geführt und befindet sich so im Inneren des Federpakets. Die Rohrhülse befindet sich somit zwischen Federpaket und Vorspannrohr. Bei Komprimieren und Entlasten des Federpakets gleiten also sowohl das Federpaket, als auch die Federplatte auf der Rohrhülse. Erfahrungsgemäß neigt bei diesem Vorgang das Federpaket dazu Auszubeulen bzw. Auszuknicken, was dazu führt dass die obere Federplatte kippt. Dies hat den Nachteil, dass für die großen Relativbewegungen zwischen Federplatte und Rohrhülse ein ungünstiger Reibkontakt entsteht. Zudem entsteht durch die Relativbewegung zwischen Federpaket und Rohrhülse viel Reibung, die zu nachteiligem Verschleiß führt, und die Rohrhülse muss vergleichsweise lang ausgebildet werden.

Der Erfindung liegt daher die Aufgabe zu Grunde, eine Überlastsicherung für Arbeitselemente landwirtschaftlicher Geräte zu schaffen, die reibungsarm und kompakt gestaltet ist.

Diese Aufgabe wird erfindungsgemäß dadurch gelöst, dass die Rohrhülse axial verschiebbar auf dem Vorspannrohr angeordnet ist und dass die Rohrhülse mit ihrer einen Stirnfläche an der Federplatte in Anlage gehalten wird.

Infolge dieser Maßnahme wird erreicht, dass ein Verkippen der oberen Federplatte durch Ausbeulen bzw. Ausknicken der Federn zumindest annährend verhindert wird und keine Relativbewegung zwischen Federplatte und Rohrhülse entsteht. Zudem wird die Relativbewegung zwischen Federpaket und Rohrhülse auf ein Minimum begrenzt. Der Reibkontakt beschränkt sich folglich im Wesentlichen auf die Relativbewegung zwischen Rohrhülse und Vorspannrohr, die ein günstiges Reibpaar bilden. Dies hat zum Vorteil, dass der Verschleiß erheblich verringert wird. Des Weiteren kann die Rohrhülse wesentlich kompakter gestaltet werden. Dadurch, dass sie axial verschiebbar auf dem Vorspannrohr ist muss sie nicht mehr den gesamten Federweg, den die obere Federplatte zurücklegt, abdecken, sondern ist auf die Länge beschränkt, die notwendig ist, um ein Ausbeulen bzw. Ausknicken des Federpakets zu verhindern. Diese Länge kann sehr kurz gehalten werden, da die Stelle unmittelbar unter der oberen Federplatte für ein Ausbeulen bzw. Ausknicken des Federpaketes besonders kritisch ist. Die Reibung zwischen dem Federpaket und der Rohrhülse beschränkt sich auf die Stauchung des Federpakets in dem der Federplatte benachbarten Bereich.

Erfindungsgemäß ist vorgesehen, dass die Rohrhülse über eine Druckfeder, die der unteren Stirnfläche der Rohrhülse zugeordnet ist, in Anlage an die obere Federplatte gehalten wird. So wird erreicht, dass nach einer Ausweichbewegung des Arbeitselementes und dem damit verbundenen Komprimieren des Federpakets die Rohrhülse bei Entspannen des Federpakets in ihre Ausgangslage zurückkehrt und stets das Vorspannrohr vor Verschleiß schützt. Weiter ist denkbar, dass die der Rohrhülse zugeordnete Druckfeder einen Beitrag zu der von dem Federpaket aufgebauten Kraft leistet. So kann das Federpaket insgesamt kleiner dimensioniert werden, da eine zusätzliche Feder zum Aufbau der Kraft genutzt wird.

In einer bevorzugten Ausführungsform entspricht der Innendurchmesser der Rohrhülse zumindest annährend dem Außendurchmesser des Vorspannrohres. Diese Gestaltung bewirkt, dass sich für die Relativbewegung zwischen Rohrhülse und Vorspannrohr verschleißarme Kontaktbedingungen einstellen.

In einer erfindungsgemäßen Ausführungsform wird der Außendurchmesser der Rohrhülse zumindest annährend gleich dem Innendurchmesser des Federpakets ausgebildet, so dass ein Ausbeulen bzw. Ausknicken verhindert wird. Das Federpaket stützt sich an der für Beulen bzw. Knicken besonders kritischen Stelle unterhalb der oberen Federplatte bereits beim Beginn des Ausbeulens bzw. Ausknickens auf der Rohrhülse ab.

In vorteilhafter Weise ist die Rohrhülse aus einem verschleißfesten Kunststoff gefertigt. Die anordnungsgemäß verschleißarmen Kontaktbedingungen zwischen Rohrhülse und Vorspannrohr werden so weiter verbessert.

In einer bevorzugten Ausführung der Erfindung, erstreckt sich der Überlasthalter von der Anbindung der Arbeitselemente an den Rahmen bis zum hinteren Ende des Federpakets. Dieser Überlasthalter dient der Übertragung der aufgebrachten Federkraft auf den Zinkenhalter.

Weitere Einzelheiten der Erfindung sind der Beispielsbeschreibung und den Zeichnungen zu entnehmen. Die Zeichnungen zeigen
- Fig.1: landwirtschaftliches Gerät, hier ein als Grubber ausgebildetes Bodenbearbeitungsgerät in perspektivischer Ansicht,
- Fig.2: Zinkenelement mit Überlastsicherung in Arbeitsposition und in Seitenansicht,
- Fig.3: Zinkenelement, gemäß Fig. 2, in Schnittansicht,
- Fig.4: Zinkenelement mit Überlastsicherung in Ausweichposition und in Seitenansicht,
- Fig.5: Zinkenelement, gemäß Fig.4, in Schnittansicht.

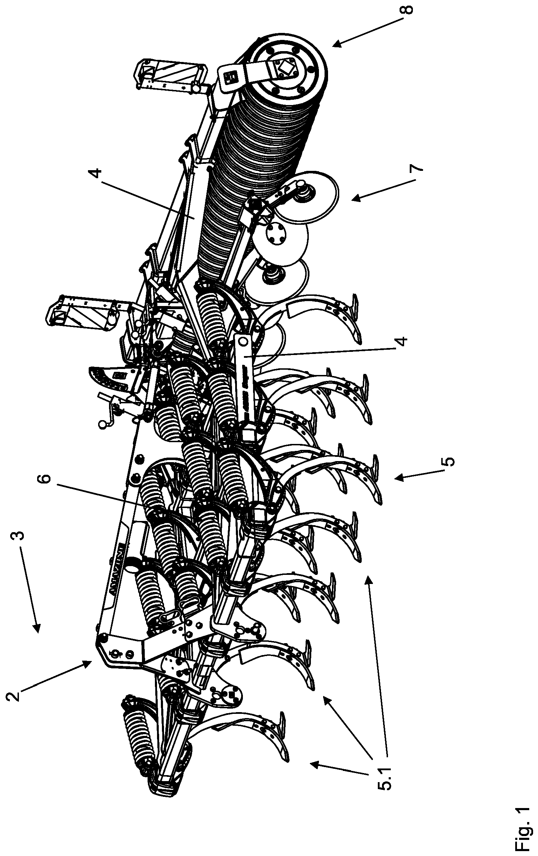

In der Fig. 1 ist ein landwirtschaftliches Gerät gezeigt, welches in dieser Ausführungsform ein als Grubber 1 ausgebildetes Bodenbearbeitungsgerät ist.

Der Grubber 1 ist an seinem vorderen Ende mit einer Dreipunktkupplungsvorrichtung 2 versehen, um ihn mit einer nicht dargestellten Zugmaschine zu verbinden. Zur möglichst flächendeckenden Bodenkultivierung wird der Grubber so hinter der Zugmaschine in Fahrtrichtung 3 gezogen.

Die Dreipunktkupplungsvorrichtung 2 ist am vorderen Ende des mehrteiligen Rahmens 4 angeordnet. Dahinterliegend, an drei hintereinander angeordneten und quer zur Fahrtrichtung 3 verlaufenden Teilen des Rahmens 4 ist eine Vielzahl von Arbeitselementen 5 befestigt. In der vorliegenden Ausführungsform sind die Arbeitselemente 5 jeweils als Zinkenelement 5.1 ausgebildet und an ihrem oberen Ende mit einer Überlastsicherung 6 versehen. In Fahrtrichtung 3 hinter den Zinkenelementen 5.1 liegt eine Einebnungseinheit 7 und eine Packerwalze 8, deren Längsachsen ebenfalls quer zur Fahrtrichtung 3 verlaufen.

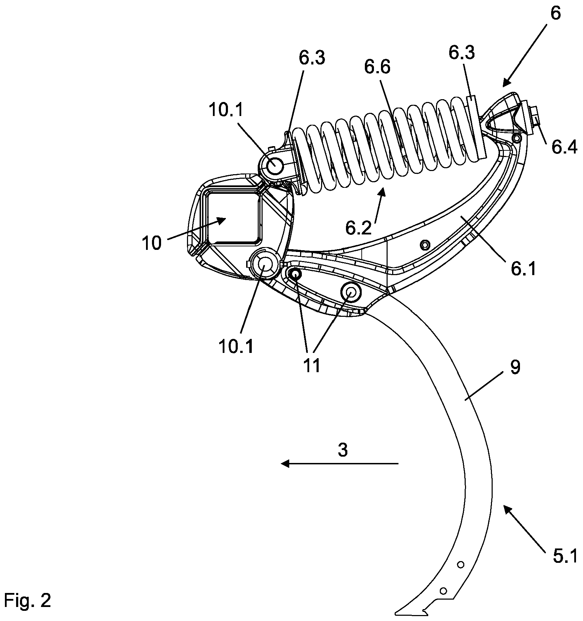

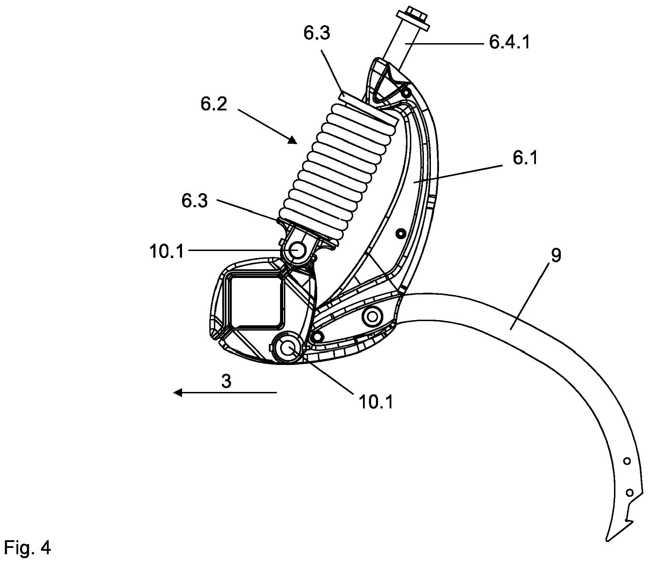

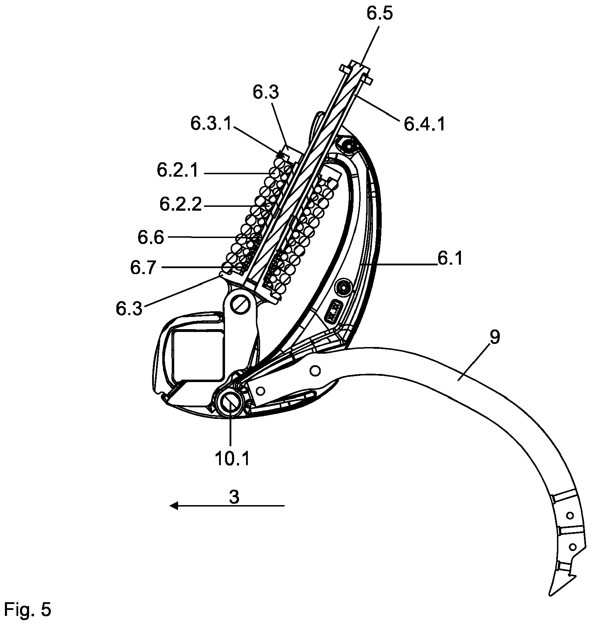

In der Fig. 2 ist eine Ausführungsform des Zinkenelements 5.1 mit Überlastsicherung 6 und Zinkenhalter 9 gezeigt. Das Zinkenelement 5.1 wird mittels der Befestigung 10 am Rahmen 4 befestigt. Der Zinkenhalter 9 und die Überlastsicherung 6, inklusive des Überlasthalters 6.1, sind über die Gelenkachsen 10.1 drehbar mittels der Befestigung 10 mit dem Rahmen 4 verbunden. Trifft der Zinkenhalter 9 in Arbeitsposition bei Bewegung in Arbeitsrichtung, die der Fahrtrichtung 3 entspricht, auf ein Hindernis auf, so weicht dieser um eine Achse schwenkend nach oben aus. Diese Achse ist die Längsachse des quer zur Fahrtrichtung 3 verlaufenden Teils des Rahmens 4 an dem das ausweichende Zinkenelement 5.1 jeweils befestigt ist. Die Gelenkachsen 10.1 befinden sich jeweils im Abstand zu dieser Achse. Durch die Ausweichbewegung der gesamten Vorrichtung wird das Federpaket 6.2 komprimiert, wie in Fig. 4, 5 zu sehen ist. Hierbei wird die obere Federplatte 6.3 in axialer Richtung des Vorspannrohres 6.4 verschoben.

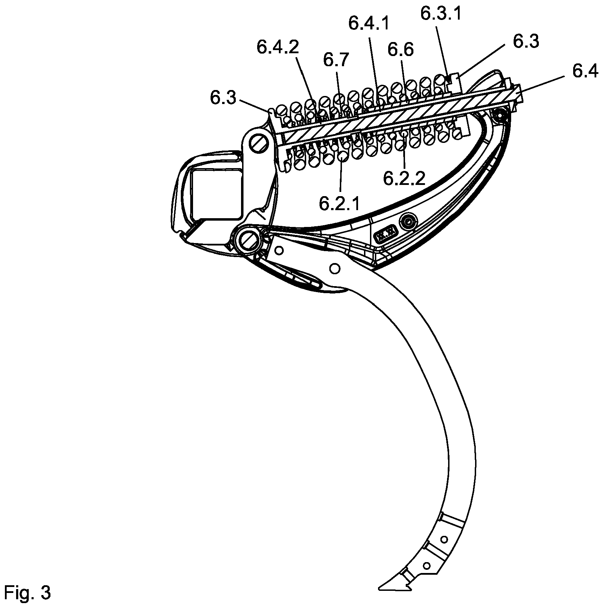

Diese Ausweichbewegung findet entgegen einer von dem Federpaket 6.2 erzeugten Kraft statt. Durch das Innere des Federpakets 6.2 ist ein Vorspannrohr 6.4 geführt, welches aus einem oberen Rohrabschnitt 6.4.1 und einem unteren Rohrabschnitt 6.4.2 annährend gleichen Querschnitts gebildet wird, wie die Fig. 3 zeigt. Damit die oben genannte Kraft auftritt, muss das Federpaket 6.2 vorgespannt sein. Hierzu ist die obere Federplatte 6.3 über das hintere Ende des Überlasthalters 6.1 mittels des Spannmittels 6.5 auf das Federpaket 6.2 gepresst. Das Spannmittel 6.5 greift in den unteren Rohrabschnitt 6.4.2 ein, der drehbar fest mit dem Rahmen 4 verbunden ist und verspannt somit alle Komponenten miteinander. Hierdurch wird der Zinkenhalter 9 in seiner normalen Arbeitsposition während der Bodenbearbeitung gehalten.

Dadurch, dass bei der Ausweichbewegung eine Relativbewegung zwischen einerseits dem Federpaket 6.2 und der oberen Federplatte 6.3 und andererseits dem Vorspannrohr 6.4 auftritt, entsteht reibungsbedingter Verschleiß an den gegeneinander bewegten Komponenten. Um das Vorspannrohr 6.4 im Innern des Federpakets 6.2 vor diesem Verschleiß zu schützen, ist eine Rohrhülse 6.6 vorgesehen. Diese Rohrhülse 6.6 umgibt das Vorspannrohr 6.4, ist axial auf dem Vorspannrohr 6.4 verschiebbar und befindet sich mit seiner oberen Stirnseite in Anlage an die oberen Federplatte 6.3. Die Federplatte 6.3 ist im mittleren Bereich, wo das Vorspannrohr 6.4 hindurch geführt ist, ausgespart und bildet einen ringnutförmigen Vorsprung 6.3.1 in den die Rohrhülse 6.6 eingreift, so dass die Federplatte 6.3 einzig von der Rohrhülse 6.6 geführt wird. Die Rohrhülse 6.6 befindet sich somit zwischen dem Federpaket 6.2 und dem Vorspannrohr 6.4 und durchdringt nicht die obere Federplatte 6.3 in dieser Ausführungsform, sondern stützt diesen mit Hilfe eines ringnutförmigen Vorsprungs 6.3.1 an der Federplatte 6.3 in axialer Richtung ab.

An der unteren Stirnseite der Rohrhülse 6.6 ist eine Hilfsfeder 6.7 vorgesehen, die ebenfalls auf dem Vorspannrohr 6.4 angeordnet ist. Die als Druckfeder ausgeführte Hilfsfeder 6.7 liegt an ihrer Unterseite auf der unteren Federplatte 6.3 auf und sorgt so in erster Linie dafür, dass die Rohrhülse 6.6 immer in Anlage an die obere Federplatte 6.3 gehalten wird. Die Anordnung der Hilfsfeder 6.6 erlaubt es weiterhin, dass sie einen kleinen Beitrag zu der von dem Federpaket 6.2 erzeugten Kraft liefert.

Wie in Fig. 3 zu sehen ist, entspricht der Innendurchmesser der Rohrhülse 6.6 zumindest annährend dem Außendurchmesser des Vorspannrohres 6.4. Vorteilhafter Weise kommt es so zu einem gleichmäßigen Kontakt zwischen Vorspannrohr 6.4 und Rohrhülse 6.6, bei dem sich der von der inneren Druckfeder 6.2.2 auf die Rohrhülse 6.6 wirkende Druck flächig verteilt. Das Federpaket 6.2 wird gebildet durch eine äußere Druckfeder 6.2.1 und eine innere Druckfeder 6.2.2. In Analoger Überlegung ist der Außendurchmesser der Rohrhülse 6.6 zumindest annährend gleich dem Innendurchmesser der inneren Druckfeder 6.2.2 des Federpakets 6.2 gewählt. Zusätzlich wird so verhindert, dass das Federpaket 6.2 bei der Komprimierung durch die Ausweichbewegung ausbeulen oder ausknicken kann. Die innere Druckfeder 6.2.2 liegt in dem für Knicken kritischen Bereich unterhalb der oberen Federplatte 6.3 an der Rohrhülse 6.6 an und stützt zusätzlich die äußere Druckfeder 6.2.1.

In der dargestellten Ausführungsform der Erfindung beschränkt sich die auftretende Relativbewegung folglich auf die der Stauchung der inneren Druckfeder 6.2.2 zur Rohrhülse 6.6 und das Gleiten der Rohrhülse 6.6 auf dem Vorspannrohr 6.4. Um für diese Reibpartner günstige Voraussetzungen zu schaffen, ist vorgesehen die Rohrhülse 6.6 aus verschleißfestem Kunststoff zu fertigen. So wird der ungünstige Fall verhindert, dass Metall auf Metall reibt. Somit wird die Lebensdauer der Überlastsicherung 6 verlängert.

Der Überlasthalter 6.1 erstreckt sich von der Befestigung 10 bis zum hinteren Ende des Federpakets 6.2, wo er mit den anderen Komponenten verspannt wird. Durch seine geschwungene Form und seiner drehbaren Festlegung in der unteren Gelenkachse 10.1 überträgt der Überlasthalter 6.1 die von dem Federpaket 6.2 aufgebrachte Kraft auf den Zinkenhalter 9. Der Zinkenhalter 9 ist mit Hilfe von Schraubverbindungen 11 an dem Überlasthalter 6.1 befestigt.

### Bezugszeichenliste

- 1: Grubber
- 2: Dreipunktkupplungsvorrichtung
- 3: Fahrtrichtung
- 4: Rahmen
- 5: Arbeitselement
- 5.1: Zinkenelement
- 6: Überlastsicherung
- 6.1: Überlasthalter
- 6.2: Federpaket
- 6.2.1: äußere Druckfeder
- 6.2.2: innere Druckfeder
- 6.3: Federplatte
- 6.3.1: Vorsprung
- 6.4: Vorspannrohr
- 6.4.1: oberer Rohrabschnitt
- 6.4.2: unterer Rohrabschnitt
- 6.5: Spannmittel
- 6.6: Rohrhülse
- 6.7: Hilfsfeder
- 7: Einebnungseinheit
- 8: Packerwalze
- 9: Zinkenhalter
- 10: Befestigung
- 10.1: Gelenkachse
- 11: Schraubverbindung

## Patentansprüche

1. Arbeitselement (5) mit Überlastsicherung (6) für landwirtschaftliche Geräte, insbesondere als Grubber (1) ausgebildete Bodenbearbeitungsgeräte, wobei das Arbeitselement (5) beim Auftreffen auf Hindernissen entgegen der Arbeitsrichtung gegen die Kraft zumindest eines Federpakets (6.2) ausweichen kann, wobei das Arbeitselement (5) um eine Achse mit einem Rahmen (4) schwenkbar verbunden ist, wobei das Federpaket (6.2) jeweils im Abstand zur Achse sowohl mit dem Rahmen (4) als auch mit dem Arbeitselement (5) über Gelenkachsen verbunden ist, wobei das Federpaket (6.2) mit Hilfe eines Vorspannrohres (6.4) und einer Federplatte (6.3) vorgespannt wird, wobei die Federplatte (6.3) zwischen dem Federpaket (6.2) und dem vor Überlast gesichertem Arbeitselement (5) angeordnet ist und zwischen dem Vorspannrohr (6.4) und dem Federpaket (6.2) ein als Rohrhülse (6.6) ausgebildeter Verschleißschutz vorgesehen ist, **dadurch gekennzeichnet, dass** die Rohrhülse (6.6) axial verschiebbar auf dem Vorspannrohr (6.4) angeordnet ist, dass die Rohrhülse (6.6) mit ihrer einen Stirnfläche an der Federplatte (6.3) in Anlage gehalten wird.

2. Arbeitselement (5) nach Anspruch 1, **dadurch gekennzeichnet, dass** die Rohrhülse (6.6) über eine Druckfeder (6.7), die der anderen Stirnfläche der Rohrhülse (6.6) zugeordnet ist, in Anlage an die Federplatte (6.3) gehalten wird.

3. Arbeitselement (5) nach Anspruch 2, **dadurch gekennzeichnet, dass** die der Rohrhülse (6.6) zugeordnete Druckfeder (6.7) einen Beitrag zu der von dem Federpaket (6.2) aufgebauten Kraft leistet.

4. Arbeitselement (5) nach einem der vorstehenden Ansprüche, **dadurch gekennzeichnet, dass** der Innendurchmesser der Rohrhülse (6.6) zumindest annährend dem Außendurchmesser des Vorspannrohres (6.4) entspricht.

5. Arbeitselement (5) nach einem der vorstehenden Ansprüche, **dadurch gekennzeichnet, dass** der Außendurchmesser der Rohrhülse (6.6) zumindest annährend dem Innendurchmesser des Federpakets (6.2) entspricht.

6. Arbeitselement (5) nach einem der vorstehenden Ansprüche, **dadurch gekennzeichnet, dass** die Rohrhülse (6.6) aus einem verschleißfestem Kunststoff besteht.

7. Arbeitselement (5) nach einem der vorstehenden Ansprüche, **dadurch gekennzeichnet, dass** sich von der Anbindung des Arbeitselementes (5) an den Rahmen (4) bis zum hinteren Ende des Federpakets (6.2) ein Überlasthalter (6.1) erstreckt.

## Claims

1. Working element (5) with overload protection (6) for agricultural implements, in particular soil-working implements in the form of grubbers (1), wherein the working element (5) on striking against obstacles can yield counter to the working direction against the force of at least one spring assembly (6.2), wherein the working element (5) is connected pivotably about an axis to a frame (4), wherein the spring assembly (6.2) is in each case connected at a distance from the axis both to the frame (4) and to the working element (5) via hinged joints, wherein the spring assembly (6.2) is pretensioned with the aid of a pretensioning tube (6.4) and a spring plate (6.3), wherein the spring plate (6.3) is arranged between the spring assembly (6.2) and the working element (5) which is protected against overload, and wear protection in the form of a tubular sleeve (6.6) is provided between the pretensioning tube (6.4) and the spring assembly (6.2), **characterized in that** the tubular sleeve (6.6) is arranged in an axially displaceable manner on the pretensioning tube (6.4), **in that** the tubular sleeve (6.6) is kept in contact by its one end surface with the spring plate (6.3).

2. Working element (5) according to Claim 1, **characterized in that** the tubular sleeve (6.6) is kept in contact with the spring plate (6.3) via a compression spring (6.7) which is assigned to the other end surface of the tubular sleeve (6.6).

3. Working element (5) according to Claim 2, **characterized in that** the compression spring (6.7) assigned to the tubular sleeve (6.6) makes a contribution to the force built up by the spring assembly (6.2).

4. Working element (5) according to one of the preceding claims, **characterized in that** the inside diameter of the tubular sleeve (6.6) at least approximately corresponds to the outside diameter of the pretensioning tube (6.4).

5. Working element (5) according to one of the preceding claims, **characterized in that** the outside diameter of the tubular sleeve (6.6) at least approximately corresponds to the inside diameter of the spring assembly (6.2).

6. Working element (5) according to one of the preceding claims, **characterized in that** the tubular sleeve (6.6) is composed of a wear-resistant plastic.

7. Working element (5) according to one of the preceding claims, **characterized in that** an overload holder (6.1) extends from the connection of the working element (5) to the frame (4) as far as the rear end of the spring assembly (6.2).

## Revendications

1. Élément de travail (5) avec sécurité contre la surcharge (6) pour appareils agricoles, en particulier des appareils de travail des sols réalisés en tant qu'extirpateur (1), en cas de rencontre avec des obstacles dans la direction opposée à la direction de travail, l'élément de travail (5) étant capable de dévier à l'encontre de la force d'au moins un bloc-ressort (6.2), l'élément de travail (5) étant relié à un châssis (4) de manière à pouvoir pivoter autour d'un axe, le bloc-ressort (6.2) étant à chaque fois relié au châssis (4) et à l'élément de travail (5) par des axes d'articulation de manière espacée par rapport à l'axe, le bloc-ressort (6.2) étant précontraint à l'aide d'un tube de précontrainte (6.4) et d'une plaque-ressort (6.3), la plaque-ressort (6.3) étant disposée entre le bloc-ressort (6.2) et l'élément de travail (5) sécurisé contre la surcharge, et une protection contre l'usure étant prévue sous forme d'un mandrin tubulaire (6.6) entre le tube de précontrainte (6.4) et le bloc-ressort (6.2), **caractérisé en ce que** le mandrin tubulaire (6.6) est disposé de manière à être mobile axialement sur le tube de précontrainte (6.4), **en ce que** le mandrin tubulaire (6.6) est maintenu en appui contre la plaque-ressort (6.3) par l'une de ses faces frontales.

2. Élément de travail (5) selon la revendication 1, **caractérisé en ce que** le mandrin tubulaire (6.6) est maintenu en appui contre la plaque-ressort (6.3) par un ressort de compression (6.7) conjugué à l'autre face frontale du mandrin tubulaire (6.6) .

3. Élément de travail (5) selon la revendication 2, **caractérisé en ce que** le ressort de compression (6.7) conjugué au mandrin tubulaire (6.6) contribue à la force établie par le bloc-ressort (6.2) .

4. Élément de travail (5) selon l'une quelconque des revendications précédentes, **caractérisé en ce que** le diamètre intérieur du mandrin tubulaire (6.6) correspond au moins approximativement au diamètre extérieur du tube de précontrainte (6.4).

5. Élément de travail (5) selon l'une quelconque des revendications précédentes, **caractérisé en ce que** le diamètre extérieur du mandrin tubulaire (6.6) correspond au moins approximativement au diamètre intérieur du bloc-ressort (6.2).

6. Élément de travail (5) selon l'une quelconque des revendications précédentes, **caractérisé en ce que** le mandrin tubulaire (6.6) est réalisé dans une matière synthétique résistante à l'usure.

7. Élément de travail (5) selon l'une quelconque des revendications précédentes, **caractérisé en ce qu'**un support de surcharge (6.1) s'étend entre le point d'attache de l'élément de travail (5) au châssis (4) et l'extrémité arrière du bloc-ressort (6.2) .
